# EUROPEAN PATENT APPLICATION

(11) **EP 4 509 024 A1**
(43) Date of publication of application: **19.02.2025**
(21) Application number: 23788229.5
(22) Date of filing: 05.04.2023
(51) Int. Cl.: A47K 13/12, E05F 5/00, F16F 9/14

(54) **ROTARY DAMPER AND VALVE, AND METHOD FOR PREVENTING REDUCTION IN TORQUE OF ROTARY DAMPER CAUSED BY WEAR OF VALVE**

(30) Priority: 13.04.2022 JP 2022066595
(71) Applicant: SOMIC MANAGEMENT HOLDINGS INC., Sumida-ku, Tokyo 130-0004 (JP)
(72) Inventor: OZAKI, Keigo, Brewer, Maine 04412 (US); YAMADA, Daisuke, Hamamatsu-shi, Shizuoka 431-2103 (JP)
(74) Representative: Ter Meer Steinmeister & Partner
(86) International application number: PCT/JP2023/014052
(87) International publication number: WO 2023/199810

(57) **Abstract**

To prevent a reduction in the torque of a rotary damper due to wear on a valve. According to the present invention, provided is a rotary damper including: an oil chamber (4); a rotor (2); a first surface (4a) occluding an end of the oil chamber (4); a second surface (4b) occluding another end of the oil chamber (4); and a valve (3) including: a first end surface (3a) facing the first surface (4a); a second end surface (3b) facing the second surface (4b); a back surface (3c) facing a curved surface (4c) of the oil chamber (4); a valve part (3d) to shut an oil path (5) formed between the rotor (2) and the valve (3) to prevent oil injected in the oil chamber (4) from flowing back through the oil path (5); and an uneven part (3k, 31) on the back surface (3c), the uneven part (3k, 31) including a recess (3k) and a projection (31), the recess (3k) forming a gap (6) between the curved surface (4c) and the uneven part (3k, 31), in which the gap (6) has a cross section to reduce due to wear on the projection (31), and a function of the valve part (3d) is protected against the wear on the projection (31).

## Description

### Technical Field

The present invention relates to a rotary damper, a valve, and a method for preventing a reduction in the torque of a rotary damper due to wear on a valve.

### Background Art

Conventionally, known has been a rotary damper including: an oil chamber; a rotor; a first surface occluding an end of the oil chamber; a second surface occluding the other end of the oil chamber; and a valve including: a first end surface facing the first surface; a second end surface facing the second surface; a back surface facing a curved surface of the oil chamber; and a valve part to shut an oil path formed between the rotor and the valve to prevent oil injected in the oil chamber from flowing back through the oil path.

For example, referring to Figs. 3 to 7 in WO 2012/141242 A1, disclosed is a rotary damper including: an oil chamber (chambers 71 and 72); a rotor; a first surface (bottom surface of a plug 30) occluding an end of the oil chamber; a second surface (upper surface of an end wall 11) occluding the other end of the oil chamber; and a valve (valve body 84) including: a first end surface facing the first surface; a second end surface facing the second surface; a back surface facing a curved surface (inner circumferential surface of a circumferential wall 12) of the oil chamber; and a valve part (protrusion 84b) to shut an oil path (first groove 81) formed between the rotor and the valve to prevent oil injected in the oil chamber from flowing back through the oil path.

However, in such a conventional rotary damper, the rotor or housing rotates with the valve having the first end surface in contact with the first surface of the oil chamber and having the back surface in contact with the curved surface of the oil chamber or the rotor or housing rotates with the valve having the second end surface in contact with the second surface of the oil chamber and having the back surface in contact with the curved surface of the oil chamber. Thus, the valve wears, leading to a reduction in torque as a disadvantage.

### Citation List

Patent Literature 1: WO 2012/141242 A1

### Summary of Invention / Technical Problem

An object of the present invention is to prevent a reduction in the torque of a rotary damper due to wear on a valve.

### Solution to Problem

For achievement of the above object, according to the present invention, provided are such a rotary damper, a valve, and a method for preventing a reduction in the torque of a rotary damper due to wear of a valve as below.
1. A rotary damper including: an oil chamber; a rotor; a first surface occluding an end of the oil chamber; a second surface occluding another end of the oil chamber; and a valve including: a first end surface facing the first surface; a second end surface facing the second surface; a back surface facing a curved surface of the oil chamber; a valve part to shut an oil path formed between the valve and the rotor to prevent oil injected in the oil chamber from flowing back through the oil path; and an uneven part on the back surface, the uneven part including a recess and a projection, the recess forming a gap between the curved surface and the uneven part, in which the gap has a cross section to reduce due to wear on the projection, and a function of the valve part is protected against the wear on the projection.
2. A rotary damper including: an oil chamber; a rotor; a first surface occluding an end of the oil chamber; a second surface occluding another end of the oil chamber; and a valve including: a first end surface facing the first surface; a second end surface facing the second surface; a back surface facing a curved surface of the oil chamber; a valve part to shut an oil path formed between the valve and the rotor to prevent oil injected in the oil chamber from flowing back through the oil path; and an uneven part on the back surface, the uneven part including a recess and a projection, the recess forming a gap between the curved surface and the uneven part, in which the oil has adequate viscosity for prevention of a reduction in torque due to the gap, the gap has a cross section to reduce due to wear on the projection, and a function of the valve part is protected against the wear on the projection.
3. A valve for a rotary damper including: an oil chamber; a rotor; a first surface occluding an end of the oil chamber; and a second surface occluding another end of the oil chamber, the valve including: a first end surface to face the first surface; a second end surface to face the second surface; a back surface to face a curved surface of the oil chamber; a valve part to shut an oil path formed between the rotor and the valve to prevent oil injected in the oil chamber from flowing back through the oil path; and an uneven part formed on the back surface, the uneven part including a recess and a projection, the recess being to form a gap between the curved surface and the uneven part, in which the gap has a cross section to reduce due to wear on the projection, and a function of the valve part is protected against the wear on the projection.
4. A method for preventing a reduction in torque of a rotary damper due to wear on a valve, the rotary damper including: an oil chamber; a rotor; a first surface occluding an end of the oil chamber; a second surface occluding another end of the oil chamber; and the valve including: a first end surface facing the first surface; a second end surface facing the second surface; a back surface facing a curved surface of the oil chamber; an uneven part formed on the back surface, the uneven part including a recess and a projection, the recess forming a gap between the curved surface and the uneven part, the gap having a cross section to reduce due to wear on the projection; and a valve part to shut an oil path formed between the rotor and the valve to prevent oil injected in the oil chamber from flowing back through the oil path, a function of the valve part being protected against the wear on the projection, the method including:
   preventing, by a reduction in the cross section of the gap due to the wear on the projection, the reduction in torque due to an increased gap between the second end surface and the second surface due to wear on the first end surface or the reduction in torque due to an increased gap between the first end surface and the first surface due to wear on the second end surface.
5. A method for preventing a reduction in torque of a rotary damper due to wear on a valve, the rotary damper including: an oil chamber; a rotor; a first surface occluding an end of the oil chamber; a second surface occluding another end of the oil chamber; and the valve including: a first end surface facing the first surface; a second end surface facing the second surface; a back surface facing a curved surface of the oil chamber; an uneven part formed on the back surface, the uneven part including a recess and a projection, the recess forming a gap between the curved surface and the uneven part, the gap having a cross section to reduce due to wear on the projection; and a valve part to shut an oil path formed between the rotor and the valve to prevent oil injected in the oil chamber from flowing back through the oil path, a function of the valve part being protected against the wear on the projection, the oil having adequate viscosity for prevention of the reduction in torque due to the gap, the method including:
   preventing, by a reduction in the cross section of the gap due to the wear on the projection, the reduction in torque due to an increased gap between the second end surface and the second surface due to wear on the first end surface or the reduction in torque due to an increased gap between the first end surface and the first surface due to wear on the second end surface.

### Advantageous Effects of Invention

A rotary damper according to the present invention enables prevention of a reduction in torque due to wear on a valve because the rotary damper includes: an oil chamber; and the valve including: a back surface facing a curved surface of the oil chamber; a valve part; and an uneven part formed on the back surface, the uneven part including a recess and a projection, the recess forming a gap between the curved surface and the uneven part, in which the gap has a cross section to reduce due to wear on the projection, and a function of the valve part is protected against the wear on the projection.

A valve according to the present invention enables prevention of a reduction in torque of a rotary damper due to wear on the valve because the rotary damper includes an oil chamber and the valve includes: a back surface that faces a curved surface of the oil chamber; a valve part; and an uneven part formed on the back surface, the uneven part including a recess and a projection, the recess forming a gap between the curved surface and the uneven part, in which the gap has a cross section to reduce due to wear on the projection, and a function of the valve part is protected against the wear on the projection.

A method according to the present invention enables prevention of a reduction in torque of a rotary damper due to wear on a valve because the rotary damper includes: an oil chamber; a rotor; a first surface occluding an end of the oil chamber; a second surface occluding another end of the oil chamber; and the valve including: a first end surface facing the first surface; a second end surface facing the second surface; a back surface facing a curved surface of the oil chamber; an uneven part formed on the back surface, the uneven part including a recess and a projection, the recess forming a gap between the curved surface and the uneven part, the gap having a cross section to reduce due to wear on the projection; and a valve part to shut an oil path formed between the rotor and the valve to prevent oil injected in the oil chamber from flowing back through the oil path, a function of the valve part being protected against the wear on the projection, and the method includes preventing, by a reduction in the cross section of the gap due to the wear on the projection, the reduction in torque due to an increased gap between the second end surface and the second surface due to wear on the first end surface or the reduction in torque due to an increased gap between the first end surface and the first surface due to wear on the second end surface.

### Brief Description of Drawings

Fig. 1 is a longitudinal sectional view of a rotary damper according to an embodiment.
Fig. 2 is a cross sectional view of the rotary damper according to the embodiment, in which an oil path formed between a valve and a rotor is shut.
Fig. 3 is a cross sectional view of the rotary damper according to the embodiment, in which the oil path formed between the valve and the rotor is open.
Fig. 4 is a perspective view of the front side of a valve adopted in the embodiment.
Fig. 5 is a perspective view of the back side of the valve adopted in the embodiment.
Fig. 6 is a plan view of the valve adopted in the embodiment.
Fig. 7 is a front view of the valve adopted in the embodiment.
Fig. 8 is a back view of the valve adopted in the embodiment.
Fig. 9 is a right side view of the valve adopted in the embodiment.
Fig. 10 is a cross sectional view of the valve adopted in the embodiment.
Fig. 11 is a perspective view of the front side of a valve adopted in a comparative example.
Fig. 12 is a perspective view of the back side of the valve adopted in the comparative example.
Fig. 13 is a graph indicating the relationship between the number of times of operation in the comparative example and the flow rate of oil passing between a first end surface of the valve adopted in the comparative example and a first surface of an oil chamber and between a second end surface of the valve adopted in the comparative example and a second surface of the oil chamber.
Fig. 14 is a graph indicating the relationship between the number of times of operation in the comparative example and the flow rate of oil passing between the back surface of the valve adopted in the comparative example and a curved surface of the oil chamber.
Fig. 15 is a graph indicating the relationship between the number of times of operation in the comparative example and torque.
Fig. 16 is a graph indicating the relationship between the number of times of operation in the embodiment and the flow rate of oil passing between a first end surface of the valve adopted in the embodiment and a first surface of an oil chamber and between a second end surface of the valve adopted in the embodiment and a second surface of the oil chamber.
Fig. 17 is a graph indicating the relationship between the number of times of operation in the embodiment and the flow rate of oil passing between the back surface of the valve adopted in the embodiment and a curved surface of the oil chamber.
Fig. 18 is a graph indicating the relationship between the number of times of operation in the embodiment and torque.

### Description of Embodiments

Embodiments of the present invention will be described below with reference to the drawings, but the present invention is not limited to such embodiments.

### Embodiments

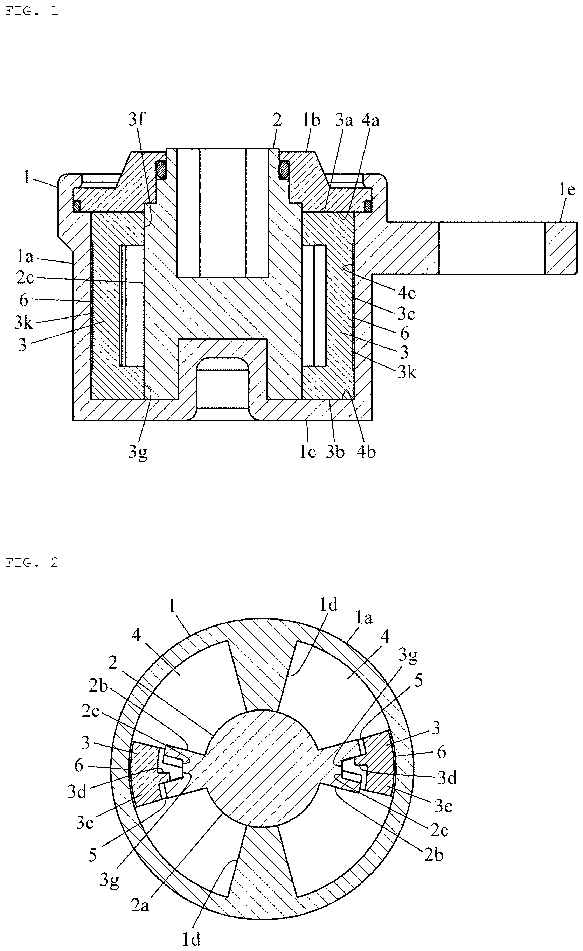

As illustrated in Fig. 1, a rotary damper according to an embodiment includes a housing (1), a rotor (2), and a valve (3).

As illustrated in Figs. 1 and 2, the housing (1) includes a circumferential wall (1a) cylindrical in shape, a lid (1b) occluding an end of the circumferential wall (1a), an end wall (1c) occluding the other end of the circumferential wall (1a), a partition wall (1d) protruding from the inner circumferential surface of the circumferential wall (1a), and a flange (1e) protruding from the outer circumferential surface of the circumferential wall (1a). As illustrated in Fig. 2, the partition wall (1d) serves as a partition that separates two oil chambers (4) formed inside the housing (1). Oil is injected in each oil chamber (4). The flange (1e) is coupled to a member that prevents the housing (1) from rotating or a member that transfers torque to the housing (1).

As illustrated in Fig. 2, the rotor (2) includes a shaft (2a) and a protrusion (2b) protruding from the outer circumferential surface of the shaft (2a). The shaft (2a) is coupled to a member that transfers torque to the rotor (2) or a member that prevents the rotor (2) from rotating. Such protrusions (2b) are disposed one-to-one in the oil chambers (4). The protrusions (2b) each have a longitudinal groove (2c) at its leading end.

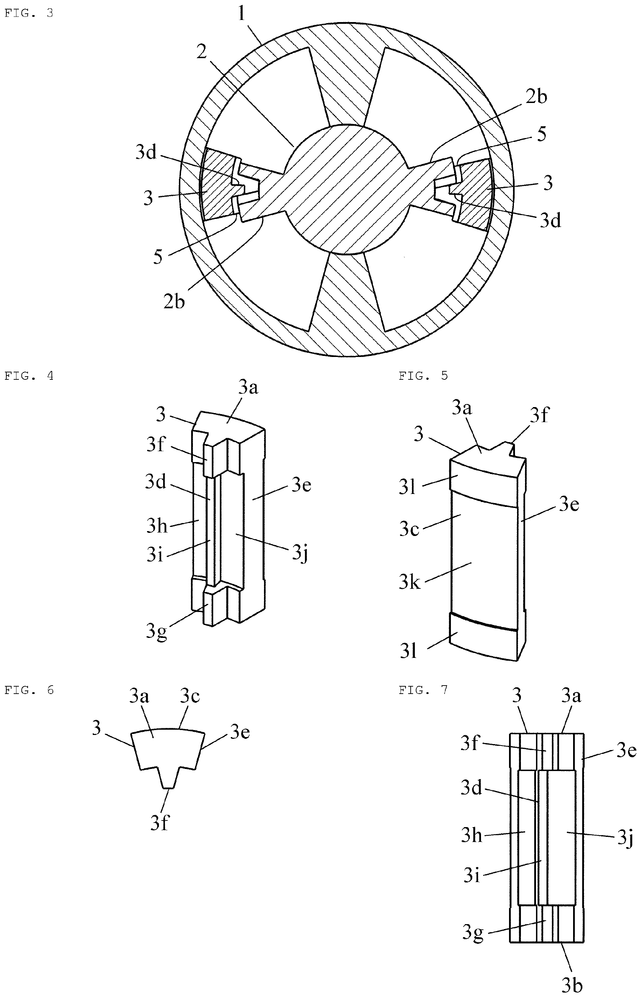

As illustrated in Fig. 2, such a valve (3) is provided between the circumferential wall (1a) of the housing (1) and each of the protrusions (2b) of the rotor (2). As illustrated in Figs. 4 to 10, each valve (3) includes a first end surface (3a), a second end surface (3b), a back surface (3c), and a valve part (3d).

As illustrated in Fig. 1, the first end surface (3a) of each valve (3) faces a first surface (4a) occluding an end of the corresponding oil chamber (4) (namely, the bottom surface of the lid (1b) in the embodiment). The second end surface (3b) of each valve (3) faces a second surface (4b) occluding the other end of the corresponding oil chamber (4) (namely, the upper surface of the end wall (1c) in the embodiment). The back surface (3c) of each valve (3) faces a curved surface (4c) of the corresponding oil chamber (4) (namely, the inner circumferential surface of the circumferential wall (1a) in the embodiment).

As illustrated in Fig. 2, Figs. 4 to 7, and Figs. 9 and 10, each valve (3) adopted in the embodiment includes a body part (3e) provided between the leading end of the corresponding protrusion (2b) of the rotor (2) and the circumferential wall (1a) of the housing (1), a first protrusion (3f) protruding from the body part (3e) on an end side of the body part (3e), and a second protrusion (3g) protruding from the body part (3e) on the other end side of the body part (3e). As illustrated in Figs. 1 and 2, the first protrusion (3f) and the second protrusion (3g) are disposed in the corresponding longitudinal groove (2c) formed on the rotor (2) such that the first protrusion (3f) and the second protrusion (3g) are movable circumferentially in the longitudinal groove (2c). As illustrated in Figs. 4, 7, 9, and 10, the valve part (3d) of each valve (3) is formed between the first protrusion (3f) and the second protrusion (3g).

As illustrated in Figs. 4, 7, and 10, each valve (3) includes a first groove (3h) extending from the left surface of the body part (3e) to the left surface of the valve part (3d), a second groove (3i) extending from the left surfaces of the first protrusion (3f) and the second protrusion (3g) to the right surfaces of the first protrusion (3f) and the second protrusion (3g), and a third groove (3j) extending from the right surface of the valve part (3d) to the right surface of the body part (3e).

As illustrated in Fig. 2, the rotary damper according to the embodiment includes oil paths (5) each formed between the corresponding valve (3) and the rotor (2). The oil paths (5) are each formed of a gap between the first groove (3h) of the corresponding valve (3) and the leading end of the corresponding protrusion (2b) of the rotor (2), a gap between the second groove (3i) of the corresponding valve (3) and the corresponding longitudinal groove (2c) formed on the rotor (2), and a gap between the third groove (3j) of the corresponding valve (3) and the leading end of the corresponding protrusion (2b) of the rotor (2).

As illustrated in Fig. 2, each valve (3) adopted in the embodiment includes the valve part (3d) to shut the oil path (5) formed between the rotor (2) and the valve (3) to prevent oil injected in the oil chamber (4) from flowing back through the oil path (5). Specifically, as illustrated in Fig. 3, in response to a counterclockwise turn of the rotor (2) or a clockwise turn of the housing (1), the valve part (3d) of each valve (3) separates from the corresponding protrusion (2b) of the rotor (2), so that the oil flows through the oil path (5). On the other hand, as illustrated in Fig. 2, in response to a clockwise turn of the rotor (2) or a counterclockwise turn of the housing (1), the valve part (3d) of each valve (3) comes in contact with the corresponding protrusion (2b) of the rotor (2), so that the flow of the oil is blocked, leading to prevention of the oil from flowing back through the oil path (5).

The rotary damper according to the embodiment generates effective torque as the valves (3) shut the respective oil paths (5). However, as the rotor (2) or the housing (1) turns, friction is generated between the first end surface (3a) of each valve (3) and the first surface (4a) of the corresponding oil chamber (4) and between the back surface (3c) of each valve (3) and the curved surface (4c) of the corresponding oil chamber (4) or friction is generated between the second end surface (3b) of each valve (3) and the second surface (4b) of the corresponding oil chamber (4) and between the back surface (3c) of each valve (3) and the curved surface (4c) of the corresponding oil chamber (4). Therefore, the valves (3) wear due to repeated turns of the rotor (2) or the housing (1). Wear on the first end surface (3a) of each valve (3) increases the gap between the second end surface (3b) of the valve (3) and the second surface (4b) of the corresponding oil chamber (4) or wear on the second end surface (3b) of each valve (3) increases the gap between the first end surface (3a) of the valve (3) and the first surface (4a) of the corresponding oil chamber (4), resulting in an increase in the flow rate of oil passing through such a gap, namely, a reduction in torque.

As illustrated in Fig. 5 and Figs. 8 to 10, each valve (3) adopted in the embodiment includes an uneven part (3k, 31) on its back surface (3c). As illustrated in Figs. 1 to 3, a recess (3k) in the uneven part (3k, 31) forms a gap (6) between the curved surface (4c) of the corresponding oil chamber (4) and the uneven part (3k, 31). With the valves (3) having the valve parts (3d) shutting the oil paths (5), the gaps (6) allow oil to flow therethrough. Thus, the gaps (6) cause a reduction in torque. However, the oil adopted in the embodiment has adequate viscosity for prevention of a reduction in torque due to the gaps (6). That is, the oil adopted in the embodiment has its viscosity set higher than the viscosity of oil for use in a comparative example described later in order to generate torque equivalent to that in the comparative example.

The cross section of each gap (6) formed between the corresponding valve (3) and the circumferential wall (1a) of the housing (1) due to the recess (3k) reduces due to wear on projections (31) in the uneven part (3k, 31). As described later, the rotary damper according to the embodiment enables suppression of a reduction in torque due to wear on each valve (3) because a reduction in torque due to wear on the first end surface (3a) and/or the second end surface (3b) is compensated with an increase in torque due to a reduction in the cross section of the gap (6).

The function of the valve part (3d) of each valve (3) is protected against wear on the projections (31). The "function" of the valve part (3d) means the ability of the valve part (3d) to shut the oil path (5). In the embodiment, the cross section of each oil path (5) (specifically, the cross section of the gap between the first groove (3h) of each valve (3) and the leading end of the corresponding protrusion (2b) of the rotor (2)) increases due to wear on the corresponding projections (31). However, the left surface of the valve part (3d) of each valve (3) adopted in the embodiment has an adequate area such that the corresponding oil path (5) can be completely shut after an increase in the cross section of the oil path (5). Therefore, the function of the valve part (3d) is protected against wear on the projections (31). Each valve (3) having the valve part (3d) enables prevention of the oil from flowing back through the oil path (5) and additionally enables enhancement of a compensation effect due to a reduction in the cross section of the gap (6).

According to an embodiment, provided is a method for preventing a reduction in the torque of a rotary damper due to wear on a valve (3). According to the method, a reduction in torque due to an increase in the gap between a second end surface (3b) of the valve (3) and a second surface (4b) of an oil chamber (4) due to wear on a first end surface (3a) of the valve (3) or a reduction in torque due to an increase in the gap between the first end surface (3a) of the valve (3) and a first surface (4a) of the oil chamber (4) due to wear on the second end surface (3b) of the valve (3) is prevented by a reduction in the cross section of a gap (6) due to wear on a projection (31) of the valve (3).

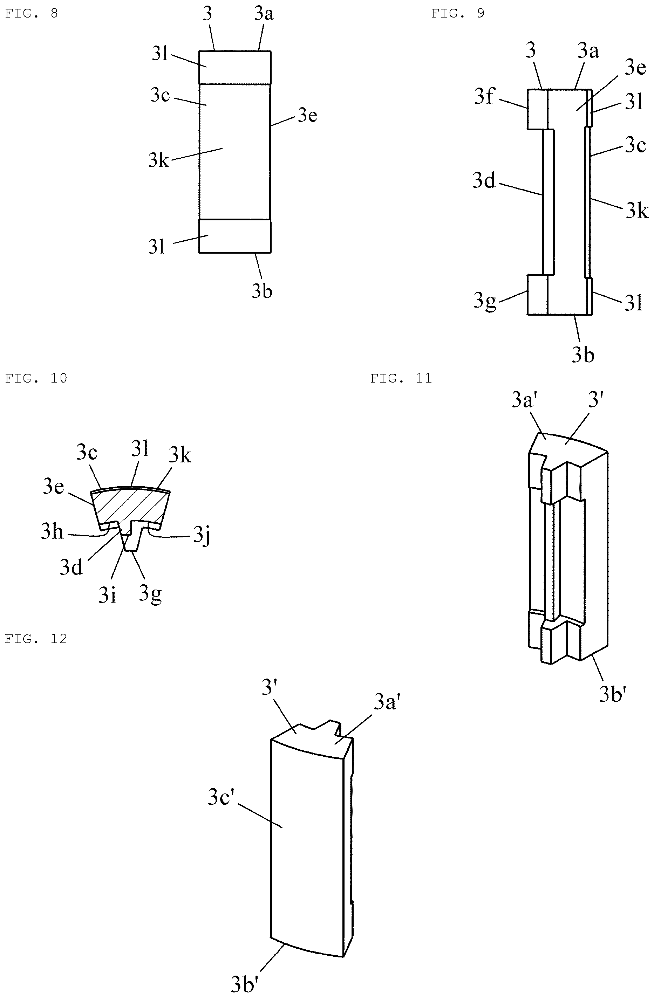

The effect of the method according to the embodiment will be described as compared with a comparative example. As illustrated in Figs. 11 and 12, a valve (3') adopted in the comparative example is different from the valve (3) adopted in the embodiment in terms of having no uneven part on its back surface (3c'). Except the above, the comparative example is identical in configuration to the embodiment.

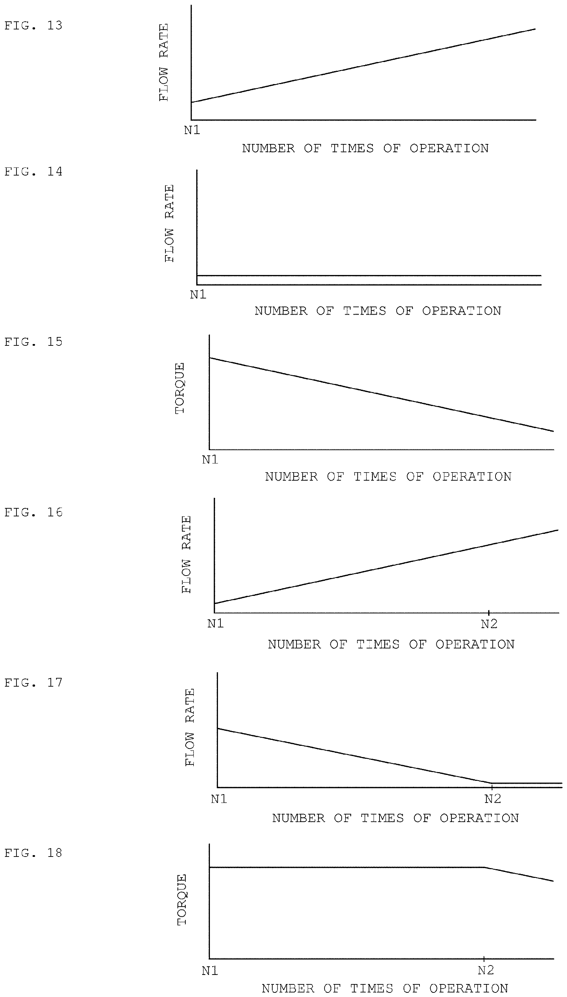

Referring to graphs indicated in Figs. 13 to 18, the "flow rate" corresponds to the estimated amount of oil passing through a particular place per unit of time, the "number of times of operation" corresponds to the number of times of turning in a direction of a rotor (2) (in a direction to shut an oil path (5)), and the "N1" represents the number of times of operation at the time of occurrence of wear on the valve (3 or 3'). Referring to the graphs indicated in Figs. 15 and 18, the "torque" corresponds to torque generated due to a turn in a direction of the rotor (2) (in the direction to shut the oil path (5)). Referring to the graphs indicated in Figs. 16 to 18, the "N2" represents the number of times of operation when the projection (31) disappears due to wear.

As illustrated in Fig. 13, in the comparative example, after occurrence of wear on a first end surface (3a') or second end surface (3b') of the valve (3'), the wear on the first end surface (3a') or second end surface (3b') of the valve (3') progresses as the number of times of operation increases from N1, leading to an increase in the flow rate of oil.

As illustrated in Fig. 16, in the embodiment, similarly to the comparative example, after occurrence of wear on the first end surface (3a) or second end surface (3b) of the valve (3), the wear on the first end surface (3a) or second end surface (3b) of the valve (3) progresses as the number of times of operation increases from N1, leading to an increase in the flow rate of oil. Note that the oil adopted in the embodiment is higher in viscosity than the oil adopted in the comparative example and thus the initial flow rate in the embodiment is less than the initial flow rate in the comparative example.

As illustrated in Fig. 14, in the comparative example, due to an increase from N1 in the number of times of operation after occurrence of wear on the back surface (3c') of the valve (3'), even when the wear on the back surface (3c') of the valve (3') progresses, the flow rate of the oil passing between the back surface (3c') of the valve (3') and a curved surface (4c) of an oil chamber (4) keeps at the initial value.

In contrast to the comparative example, in the embodiment, as illustrated in Fig. 17, due to an increase from N1 in the number of times of operation after occurrence of wear on the projection (31) of the valve (3), the wear on the projection (31) of the valve (3) progresses. Then, the progress of the wear causes a reduction in the cross section of the gap (6) between a recess (3k) of the valve (3) and a curved surface (4c) of the oil chamber (4), leading to a reduction in the flow rate of the oil passing between the back surface (3c) of the valve (3) and the curved surface (4c) of the oil chamber (4). Until the number of times of operation reaches N2, that is, until the projection (31) of the valve (3) disappears due to wear, the flow rate reduces continuously.

As a result, as illustrated in Fig. 15, in the comparative example, after occurrence of wear on the valve (3'), an increase from N1 in the number of times of operation causes a reduction in torque.

In contrast to this, in the embodiment, as illustrated in Fig. 18, even after occurrence of wear on the valve (3), the torque keeps at the initial value until the number of times of operation reaches N2, that is, until the projection (31) of the valve (3) disappears due to wear. Therefore, the present invention enables effective prevention of a reduction in the torque of a rotary damper due to wear on a valve (3).

### Reference Signs List

- 1: Housing
- 1a: Circumferential wall
- 1b: Lid
- 1c: End wall
- 1d: Partition wall
- 1e: Flange
- 2: Rotor
- 2a: Shaft
- 2b: Protrusion
- 2c: Longitudinal groove
- 3: Valve
- 3a: First end surface
- 3b: Second end surface
- 3c: Back surface
- 3d: Valve part
- 3e: Body part
- 3f: First protrusion
- 3g: Second protrusion
- 3h: First groove
- 3i: Second groove
- 3j: Third groove
- 3k: Recess
- 31: Projection
- 4: Oil chamber
- 4a: First surface
- 4b: Second surface
- 4c: Curved surface
- 5: Oil path
- 6: Gap

## Claims

1. A rotary damper comprising: an oil chamber; a rotor; a first surface occluding an end of the oil chamber; a second surface occluding another end of the oil chamber; and a valve including: a first end surface facing the first surface; a second end surface facing the second surface; a back surface facing a curved surface of the oil chamber; a valve part to shut an oil path formed between the valve and the rotor to prevent oil injected in the oil chamber from flowing back through the oil path; and an uneven part on the back surface, the uneven part including a recess and a projection, the recess forming a gap between the curved surface and the uneven part, wherein the gap has a cross section to reduce due to wear on the projection, and a function of the valve part is protected against the wear on the projection.

2. The rotary damper according to claim 1, wherein the oil has adequate viscosity for prevention of a reduction in torque due to the gap.

3. A valve for a rotary damper including: an oil chamber; a rotor; a first surface occluding an end of the oil chamber; and a second surface occluding another end of the oil chamber, the valve comprising: a first end surface to face the first surface; a second end surface to face the second surface; a back surface to face a curved surface of the oil chamber; a valve part to shut an oil path formed between the rotor and the valve to prevent oil injected in the oil chamber from flowing back through the oil path; and an uneven part formed on the back surface, the uneven part including a recess and a projection, the recess being to form a gap between the curved surface and the uneven part, wherein the gap has a cross section to reduce due to wear on the projection, and a function of the valve part is protected against the wear on the projection.

4. A method for preventing a reduction in torque of a rotary damper due to wear on a valve, the rotary damper including: an oil chamber; a rotor; a first surface occluding an end of the oil chamber; a second surface occluding another end of the oil chamber; and the valve including: a first end surface facing the first surface; a second end surface facing the second surface; a back surface facing a curved surface of the oil chamber; an uneven part formed on the back surface, the uneven part including a recess and a projection, the recess forming a gap between the curved surface and the uneven part, the gap having a cross section to reduce due to wear on the projection; and a valve part to shut an oil path formed between the rotor and the valve to prevent oil injected in the oil chamber from flowing back through the oil path, a function of the valve part being protected against the wear on the projection, the method comprising: preventing, by a reduction in the cross section of the gap due to the wear on the projection, the reduction in torque due to an increased gap between the second end surface and the second surface due to wear on the first end surface or the reduction in torque due to an increased gap between the first end surface and the first surface due to wear on the second end surface.

5. The method according to claim 4, wherein the oil has adequate viscosity for prevention of the reduction in torque due to the gap.
